# EUROPEAN PATENT SPECIFICATION

(11) **EP 2 329 977 B1**
(45) Date of publication and mention of the grant of the patent: **14.08.2019**
(21) Application number: 10192256.5
(22) Date of filing: 23.11.2010
(51) Int. Cl.: B60J 5/10

(54) **Vehicle door**
Fahrzeugtür
Portière de véhicule

(30) Priority: 04.12.2009 GB 0921232
(43) Date of publication of application: 08.06.2011
(73) Proprietor: Nissan Motor Manufacturing (UK) Ltd., Cranfield Bedfordshire MK43 0DB (GB)
(72) Inventor: Day, Christopher, Cranfield, Bedfordshire MK43 0DB (GB)

(56) References cited:
- WO-A1-2009/104565
- DE-A1-102005 061 478
- JP-A- H09 193 665
- US-B2- 6 416 115

## Description

The present invention relates to a door for a vehicle such as a motor car, and in particular but not exclusively, to a rear door that opens upwards.

For vehicles such as hatchback and estate cars having a rear door that is hinged at its top and opens upwards (sometimes called a tailgate), it is often necessary for the user of the vehicle to close the rear door by pulling/pushing on an outer surface of the door. It is common for the outer surface of the rear door to become soiled and therefore when the user closes the rear door dirt is transferred to the user's fingers, which leads to user dissatisfaction.

The rear doors of hatchback and estate vehicles are heavy and therefore most such vehicles include gas struts to assist with door opening. When closing the door, the user has to overcome the resistance provided by the gas struts. For people with limited reach, it can be difficult to grasp the top of the rear door and pull it downwards. Accordingly, some rear doors include handles that can be pulled downwards to close the door. For example, it is known to have a flexible strap positioned towards one side of the door. However, current designs limit how the user can use the handles since they have discrete positions, which may or may not be comfortable for a particular user. There are also physiological differences between different users that cause their arms to rotate and lift in different ways. Providing a handle in a discrete position can make the movement when closing the rear door feel unnatural to some users. Using a single handle on one side of a door can also feel uncomfortable for people who have an opposed dominant hand.

A further problem with having a single handle located close to one side of the door is that a lateral twisting load can be applied to the door hinges, which over time can cause asymmetrical wear and possible weakening of the hinges.

US 6416115 describes a rear door that includes an external handle located near the outer edge of the door. The arrangement exposes the handle to dirt and dust and therefore does not prevent the user from getting dirty hands. Furthermore, the handle does not allow users to operate the door with both hands, and the central position of the handle dictates where the user must stand to operate the handle. If the user is standing towards one side of the vehicle, as may be the case in a confined space such as in a car park, it is unlikely that the user will be able to reach far enough to close the door using the handle. Instead, the user will have to resort to closing the rear door by pushing/pulling on the outer surface of the door. US 6385816 discloses the provision of tailgate handles that fold into the tailgate to avoid taking up room in a load bay. The embodiment described includes two handles that are pivotally attached to recesses in the inside of the door. When the rear door is opened, the handles pivot such that they hang downwards ready for use. The user pulls on the handles to close the door. As the door moves into the closed position, the handles pivot back into their respective recesses. The handles are located at discrete positions, which may be uncomfortable for some users. For taller users, there is a possibility of accidental injury by banging his/her head against the handles since the handles only pivot about one axis. Furthermore, the handles do not allow the wrist to flex in more than one axis and may feel unnatural to use. Also, it is also necessary to have strong fixing points for fixing the handles to the door.

It is also known to include a pocket within the door thickness that is accessible via the edge of the door that is opposite the hinges. However the pocket is discrete and therefore dictates the position that the user has to stand when closing the door. Such a pocket, accessible from outside and from inside the vehicle; but not from a standing position alongside the vehicle; is disclosed in closest prior art document DE102005061478A.

Although the above problems have been described with reference to rear doors on cars, it will be apparent that similar problems occur with rear doors on other vehicles such as vans, and on vehicles that have side doors that open upwards such as gull-wing doors.

Accordingly the present invention seeks to mitigate at least one of the aforementioned problems.

According to one aspect of the invention there is provided a door for a vehicle, comprising edges at the peripheral surface or wall of the door, including a first edge for pivotal attachment to the vehicle, a free edge opposite the first edge, a side edge and pocket means formed in the thickness of the door, wherein the pocket means provides at least one handle that can be grasped by a user to close the door; characterized in that: the pocket means opens through the free edge and the side edge.

By edge it is meant a peripheral surface or wall and not necessarily the very extremity of the door. For example, the door may include an edge in the form of a wall that extends around the periphery of the door and wherein the door may have an overhang portion that extends beyond the wall. The thickness of the door includes any trim elements and is not limited to the thickness of the door structure. Thus the pocket can be formed in the structure of the door and/or the trim element. Typically the handle is located within the vehicle when the door is closed and therefore the handle is not exposed to dirt and dust from roads when the vehicle is in use. Thus the user does not get soiled fingers when closing the door. Also, because the pocket means is accessible from a plurality of edges the user is able to close the door when standing in different positions relative to the vehicle.

Advantageously the pocket means can include a first pocket that opens through both the free edge and the side edge thereby providing a first handle that is accessible via the free edge and the side edge. This is particularly useful in confined spaces, for example when another vehicle is parked close to the rear of the user's vehicle and the user has to stand towards one side of the vehicle when closing the rear door. Additionally, or alternatively, two separate pockets can be formed in the free edge and the side wall to provide a similar effect. For example, the pocket means can include a first pocket formed within the thickness of the door that opens through the free edge and a second pocket that opens through the side edge, thereby providing a first handle that is accessible via the free edge and a second handle that is accessible via the side edge.

Advantageously the first pocket can be formed so that it is accessible via a part of the side edge that is adjacent to the free edge. For example, the pocket can be formed in a corner portion of the door where the free edge meets the side edge. This provides an optimised position for the pocket and handle.

The door can include a second side edge. Advantageously the first pocket can open through the second side edge. This enables the user to stand towards the other side of the vehicle when closing the rear door. Alternatively the pocket means can include a second pocket that opens through the free edge and through the second side edge thereby providing a second handle that is accessible via the free edge and the second side edge to provide a similar effect. Additionally, or alternatively, two separate pockets can be formed in the free edge and in the second side wall to provide a similar effect.

Advantageously the door can include an outer skin, an inner skin that is spaced apart from the outer skin and an edge wall that connects the inner and outer skins together, and wherein the pocket means is formed in the edge wall between the inner and outer skins. The edge wall can be formed integrally with at least one of the inner and outer skins. The edge wall can include at least one aperture formed therein that provides access to a cavity between the inner and outer skins of the door. Advantageously the edge wall can include a plurality of apertures formed therein. The door can include a trim element having a pocket shaped part that is arranged to fit through the aperture into the cavity. Thus the handle can be provided by an inner surface of the pocket, which is provided by the trim element mounted on an overhanging part of the inner skin. The trim element can be profiled to provide an ergonomic handle having a good gripping surface to stop the user's hands from slipping off the handle during use. The inner skin stiffens the trim element and provides a significant part of the strength of the handle.

Preferably the trim element includes a first part comprising a substantially planar area for covering at least a part of an inner skin of a vehicle door, an end wall and first and second side walls, wherein each wall projects from the planar area, and a first pocket formation that is arranged to fit within a first aperture formed in an edge wall of the vehicle door, said first pocket formation opening through the end wall and the first side wall of the trim element. The first pocket can be arranged to open through the second side wall. Alternatively the trim element can include a second pocket formation that is arranged to fit within a second aperture formed in an edge wall of the vehicle door, said second pocket formation opening through the end wall and the second side wall of the trim element. The trim element is arranged to be attached to the vehicle door such that the first part overlies the pocket formations and the openings of the pockets face outwards. Advantageously the height of each pocket adjacent the opening is less than the height at an end wall of each pocket. Advantageously each pocket can be L-shaped when viewed in plan. Advantageously at least one internal surface of the pocket can be profiled to provide a good gripping surface.

Alternatively the pocket means is formed in the trim element, and the trim element is arranged to overlie the inner skin such that the pocket means is located outside of the structure of the door. That is, the pocket can be formed within the overall thickness of the door such that it is not located within the cavity between the inner and outer skins.

Advantageously the trim element may comprise a moulded component. Alternatively the trim element can be manufactured from pressed sheet material.

The trim element can be attached to the inner skin using a plurality of connectors that snap fit the trim element to the inner skin. For example, the inner skin can have an arrangement of holes formed therethrough that are each arranged to receive one of the connectors. By providing the handle in the manner described above and by connecting the trim element to the inner skin using connector elements, the handle is sufficiently strong for operational use; and significant advantages are achieved in terms of speed and ease of assembly and a reduction in cost when compared with bolting, or pivotally attaching, a handle to the door. This is because bolting, or pivotally attaching a handle to the door, requires the use of power tools on the assembly line and for the door to be locally reinforced where the handle is connected to the door. Overall this is a more costly manufacturing and assembly procedure when compared with using the trim element and the inner skin as a handle and attaching the trim element with snap fit connectors. Given that millions of cars are produced annually, a small saving in manufacturing costs and assembly time for each vehicle can have a significant overall benefit.

Advantageously the pocket means can extend along a substantial portion of the width of the door. The width of the door is the distance between the side edges along the free edge. Advantageously the pocket means can extend along approximately 30 to 100 % of the width of the door and more advantageously along approximately 50 to 90% of the width of the door. This enables the user to close the door using two hands, to position his hands at the most comfortable positions within the pocket, and to stand at different positions relative to the door while still being able to successfully grip the handle. Thus the handle is suitable for both left and right-handed persons. Weaker people can use both hands to close the back door, which lowers the overall effort required to close the door. It also reduces lateral twist on the door hinges and gas struts.

In embodiments having first and second pockets providing first and second handles, each pocket may extend along approximately 15 to 50% of the width of the door, and preferably approximately 25 to 45 % of the width of the door. The first and second pockets can be differently sized and thus extend along different proportions of the width of the door. The door can include at least one additional pocket.

The door can include a lock mechanism and the first pocket can be located on one side of the lock mechanism and the second pocket can be located on the other side of the lock mechanism. Preferably the lock mechanism is located centrally with respect to the width dimension of the door and the first and second pockets are arranged substantially symmetrically on either side of the lock mechanism. The edge wall can be recessed to accommodate the lock mechanism.

The depth of each pocket is typically in the range 65 to 95 mm. This ensures that each pocket is deep enough to allow full length finger access but shallow enough to ensure that the forearm stops the door from closing before the fingers are removed. This is controlled by the selection of an appropriate distance between the extremity of the free edge of the door and the gripping edge of the handle. This distance is typically in the range 160 to 210mm. The outer skin can extend beyond the handle in the direction of the free end of the door, thereby presenting a lip that extends across substantially the full width of the door. The end wall of the inner skin can be inclined to the outer skin such that the outer skin extends beyond the handle.

Advantageously the door can include a recessed portion that enables a user to access the pocket means from within the vehicle. This enables the user to pull the door closed from within the vehicle without crushing his/her hand between the door and the vehicle body.

According to another aspect of the invention there is provided a vehicle including a door according to any configuration described herein.

According to another aspect of the invention there is provided a door for a vehicle, including a top edge having pivot means for pivotally coupling the door to the vehicle, a bottom edge opposite the top edge, first and second side edges, an outer face and an inner face and at least one pocket formed between the inner and outer faces, said pocket opening through the bottom edge and at least one of the side edges, and arranged to provide a handle for the user to push and / or pull against when closing the door. The top edge is adjacent the roof of the vehicle when the door is closed. The bottom edge abuts the floor of the vehicle loadbed when the door is closed. The inner face is typically defined by an inner door skin or by a trim element mounted thereon.

Embodiments of the invention will now be described, by way of example only, with reference to the accompanying drawings, in which:
Figure 1 is an isometric view of a vehicle door in accordance with a first embodiment of the invention, seen from the inside;

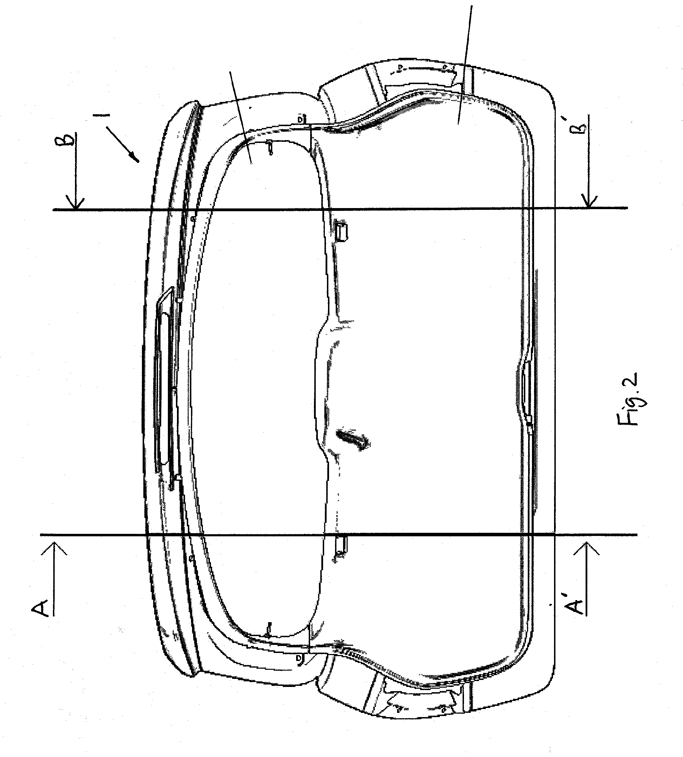

Figure 2 is an end elevation showing the inner face of the door when closed;
Figure 3 is an isometric sectional view along the line B-B' in Figure 2;
Figure 4a is a side sectional view along the line A-A' in Figure 2;
Figure 4b is an enlarged view of part of the side sectional view of Figure 4a;
Figure 5 is an elevation similar to Figure 2 showing some hidden details and an arrangement of snap fit connectors for connecting a trim element to the vehicle door;

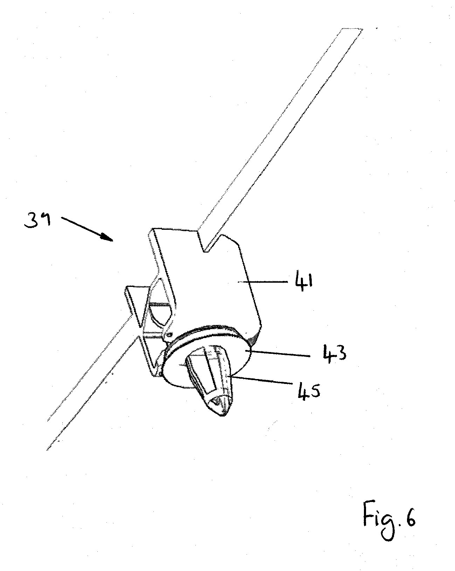

Figure 6 is an isometric view of a connector for connecting the trim element to the door;
Figure 7 is a diagrammatic side sectional view showing a variant of the pocket arrangement of the first embodiment; and
Figure 8 is a diagrammatic side sectional view of a second embodiment of the invention.

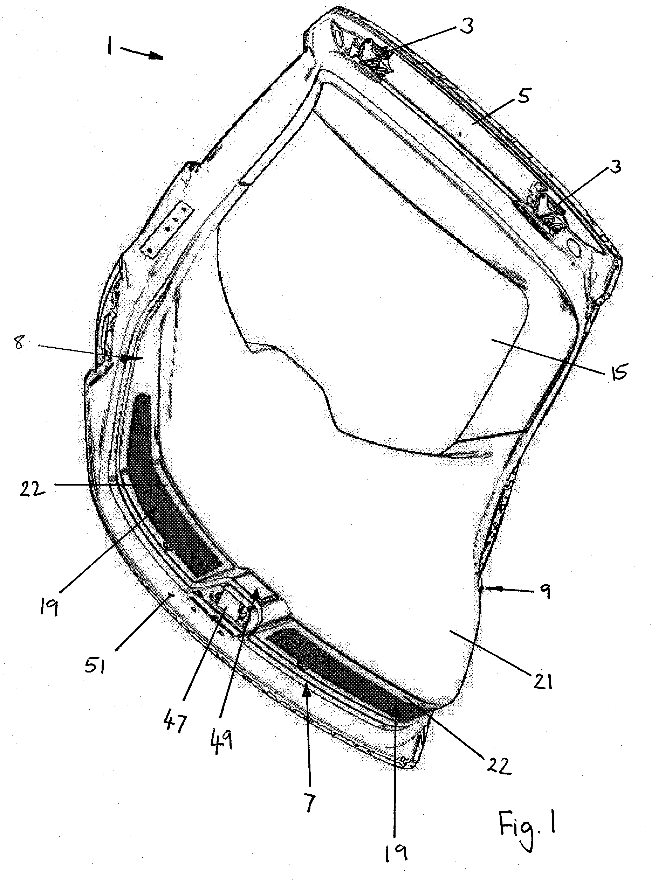

Figure 1 shows a rear door 1 for a car, which is sometimes referred to as a tailgate. The door 1 includes two hinges 3 at its upper edge for pivotally attaching the door 1 to the car body (not shown) in a conventional manner. The hinges 3 are mounted on an upper end wall 5 that is adjacent the roof when closed, and the door is pivotally connected to the car body such that it opens upwards and closes downwards. The door 1 further includes a lower end wall 7 opposite the hinges 3, which abuts the floor of the vehicle loadbed when the door is closed, and first and second side walls 8, 9, that connect the upper and lower end walls 5, 7. Typically the door is supported on the vehicle by gas struts (not shown) in a conventional manner.

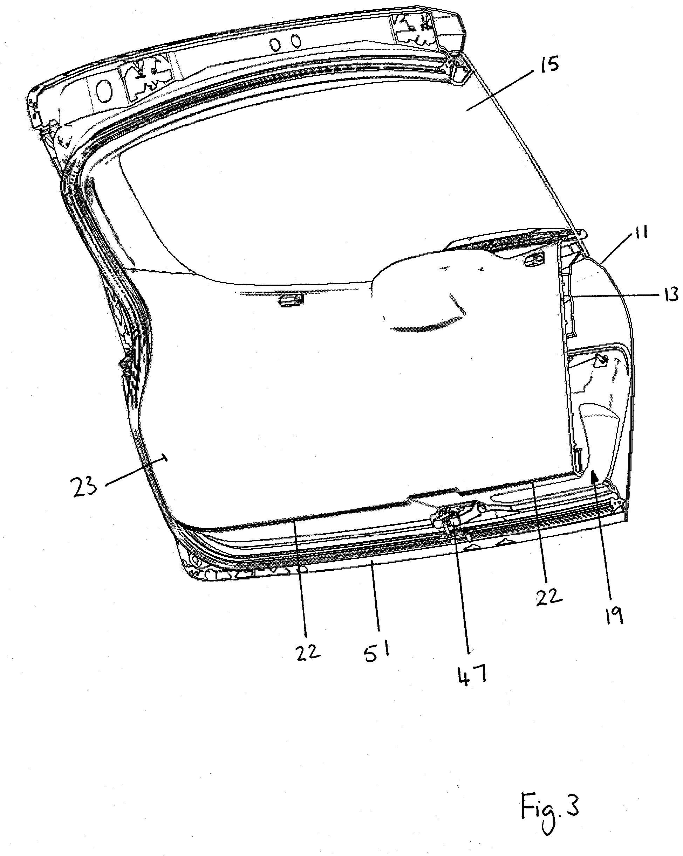

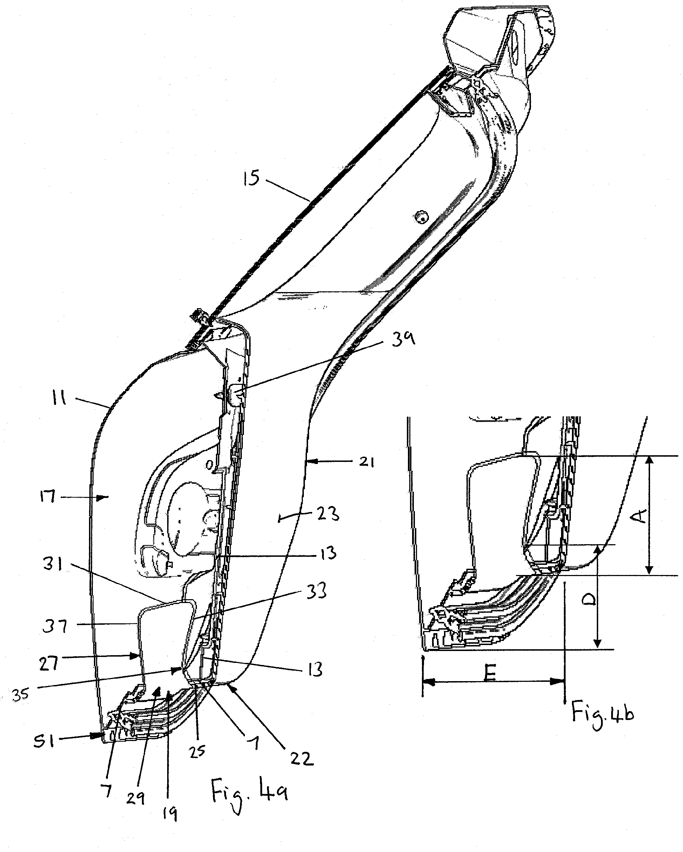

The door 1 is typically fabricated from pressed steel or aluminium, but may be made from a plastics material, and includes an outer skin (11, Fig. 3), an inner skin (13, Fig. 3) and an aperture for receiving the rear window 15. The inner and outer skins 13, 11 are spaced apart and have a cavity (17, Fig. 4a) therebetween. The end wall 7 connects the inner skin 13 to the outer skin 11. The outer skin 11 is typically clinched and hemmed over the inner skin 13 to form the structure of the door 1. In Figure 4, the lower end wall 7 is shown as an integral part of the inner skin 13.

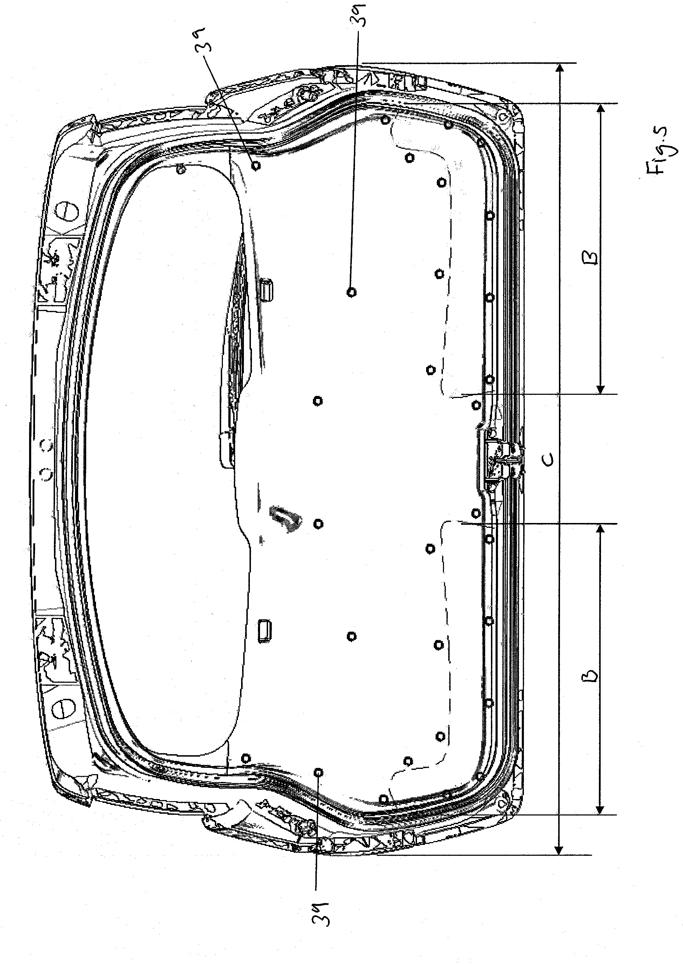

Slots 19 are formed in the lower end wall 7 and in those parts of the first and second side walls 8, 9 that adjoin the lower end wall 7, thus defining two substantially 'L' shaped cutaway sections when viewed in plan (see Figure 5).

The door 1 includes a moulded trim element 21 that provides a handle 22 that can be gripped by a user to close the door. The trim element 21 includes a first part (23, Fig. 3) that covers a substantial portion of the inner skin 11 and a second part (25, Fig. 4a) that overlies the end wall 7 and has two pockets (27, Fig. 4a) that can be inserted into the cavity 17 between the inner and outer skins 13, 11, via the slots 19. The pockets 27, which are shown in broken line in Fig. 5, are substantially L-shaped, comprising a horizontal portion that extends along the lower edge of the door and a substantially vertical portion that extends a short distance along one of the side walls. The depth (see dimension A in Figure 4b) of each pocket 27 is sufficient to accommodate the full length of a person's fingers and is typically in the range 65 to 95mm. The height of the pocket adjacent the mouth 29 is slightly less than the height at the end wall 31 due to an inner wall 33 having a curved portion 35 adjacent the mouth 29. The curved portion 35 provides a profiled gripping surface for the handle 22. An outer wall 37 of the pocket is arranged substantially parallel to the door outer skin 11. The end wall 31 of the pocket is inclined upwards from the outer wall 37 to the inner wall 33.

Thus, each pocket 27 is formed within the thickness of the door (dimension E in Figure 4b). The handle 22 comprises an overhanging portion of the moulded trim element 21 that is reinforced by a part of the inner skin 13. The trim element 21 provides an ergonomic gripping surface that is comfortable for the user to hold when closing the door.

Each pocket 27 and each handle 22 extends across approximately 35% (see dimension B in Figure 5) of the width of the door (see dimension C in Figure 5), thus providing access to the handles 22 along approximately 70% of the width of the door. This enables a user to grip the handles 22 with either one or two hands and to select the position that is most comfortable for him/her. It also enables the user to grasp one of the handles 22 when standing in a position that is offset from the centre, for example when a confined space prevents the user from standing in a more central position. Since the handles also extend along the side walls 8, 9 it is possible for the user to grasp a handle 22 when standing to one side of the vehicle. When using both handles a relatively even load can be applied to the door, which means that the lateral twisting forces applied to the hinges are small. Also, because the handles 22 are integrated with the door panel, there is no hanging part for the user to accidently knock his/her head against.

When closing the rear door 1 using the handle 22, the lip 51 may contact the user's hand or arm at some stage in the rotation. It is advantageous to select an appropriate dimension (see dimension D in Figure 4b) for the distance between the edge of the lip 51 to the gripping edge of the handle to ensure that the lip 51 engages the user's forearm instead of the user's hand. This is because the forearm is less likely to be injured by contact with the lip 51. Typically this dimension is in the range 160 to 210mm.

The trim element 21 is attached to the door skin 13 via an arrangement of discrete connectors 39. The connectors 39 enable the trim element 21 to be attached to the door 1 with a snap fit. Each connector has a body 41 for connection with the underside of the trim element, a flange 43 that provides a contact surface with the inner skin 13 and a deformable stud 45 that can be inserted into a hole formed in the inner skin 13. The inner skin 13 has an arrangement of holes distributed to provide adequate gripping force for holding the trim element 21 firmly in place. One such arrangement is shown in Figure 5. It will be apparent to the skilled person that the holes can alternatively be formed in the trim element 21 and that the connectors 39 can be connected to the inner skin 13.

A lock 47 is located on the inside of the outer skin 11. The lower end wall 7 includes a recess 49 to accommodate the lock 47. The outer skin 11 is arranged such that it covers the pocket 27 to prevent the pocket from being exposed to dirt from outside of the vehicle. The outer skin 11 includes an extended part 51 that protrudes beyond the lower end wall 7 and that provides a lip that extends across substantially the full width of the rear door 1. The lip 51 includes a seal for engaging with a complementary formation on the vehicle body to prevent the ingress of water and dirt into the boot (trunk) of the vehicle. Alternatively, the seal can be located on the vehicle body.

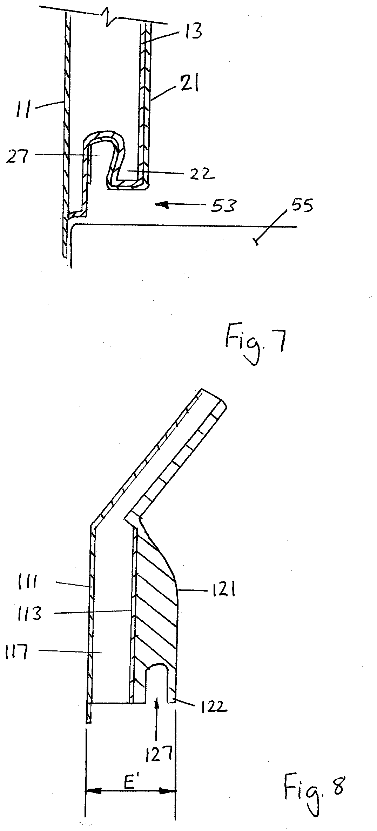

Optionally, inner skin 11 can include at least one recessed portion 53 that enables the pocket 27 to be accessed from within the vehicle (see Figure 7). For example, a user sitting within the rear of the vehicle is then able to reach upwards and grasp the handle 22 and pull the door 1 fully closed. The recessed portion 53 allows the user to release their grasp on the handle 22 once they have closed the door 1 without any risk of trapping their hand between the door 1 and the loadbed floor 55.

Figure 8 shows a side sectional view of a second embodiment of the invention. The second embodiment of the invention is similar to the first embodiment except that the pockets 127 and handles 122 are formed in the trim element 121 such that they lie within the thickness of the door (see dimension E' in Figure 8) but so that they are located outside of the cavity 117 between the inner and outer skins 113, 111 of the door. Thus the trim element 121 is arranged to withstand the loads applied when the user closes the door without any reinforcement from the structure of the door.

It will be apparent to the skilled person that modifications can be made to the above embodiment that fall within the scope of the invention. For example, it may not be necessary to include a trim element 21. The pockets 27 can be formed directly into the lower end wall 7 and / or first and second side walls 8, 9 in the cavity 17 between the inner and outer skins 13,11.

The pockets 27 and handles 22 can extend along different proportions of the width of the door. Clearly the greater the extent of the handles 22 the greater the flexibility for the user to find a comfortable gripping position to account for the context. Preferably the pockets and the handles extend along approximately 30 to 100% of the width of the door and more preferably along approximately 40 to 90%, and more preferably still along approximately 50 to 80% of the width of the door. In the arrangement wherein one pocket 27 extends across 100% of the width of the door, the pocket 27 is accessible via the first and second side walls 8, 9.

Instead of having pockets 27 arranged such that they are accessible via the end wall 7 and one of the side walls 8, 9, the door can include at least one pocket formed in the end wall and separate pockets formed in each of the side walls 8, 9.

The door does not have to be a rear door, for example it may be a vehicle side door such as a gull-wing door or an engine-bay cover such as a bonnet or hood.

## Claims

1. A door (1) for a vehicle, comprising edges at the peripheral surface or wall of the door, including a first edge (5) for pivotal attachment to the vehicle, a free edge (7) opposite the first edge (5), a side edge (8) and pocket means (27, 127) formed in the thickness of the door (1), wherein the pocket means (27, 127) provides at least one handle (22) that can be grasped by a user to close the door (1);
**characterized in that**:
the pocket means opens through the free edge (7) and the side edge (8).

2. A door (1) according to claim 1, wherein the pocket means (27, 127) includes a first pocket that opens through both the free edge (7) and the side edge (8) thereby providing a first handle (22) that is accessible via the free edge (7) and the side edge (8).

3. A door (1) according to claim 2, wherein the door (1) includes first (8) and second (9) side edges and the first pocket opens through the first and second side edges.

4. A door (1) according to claim 2, wherein the door (1) includes first (8) and second (9) side edges and the pocket means (27, 127) includes a second pocket that opens through the free edge (7) and through the second side edge (9) thereby providing a second handle (22) that is accessible via the free edge (7) and the second side edge (9).

5. A door (1) according to any one of the preceding claims, wherein the pocket means (27, 127) includes a first pocket that opens through the free edge (7) and a second pocket that opens through the side edge (8, 9), thereby providing a first handle (22) that is accessible via the free edge (7) and a second handle (22) that is accessible via the side edge (8, 9).

6. A door (1) according to any one of the preceding claims, including an outer skin (11), an inner skin (13) that is spaced apart from the outer skin (11), and an edge wall (7) that connects the inner and outer skins together, wherein the pocket means (27) is formed in the edge wall (7) between the inner (13) and outer (11) skins.

7. A door (1) according to claim 6, wherein the edge wall (7) includes at least one aperture (19) formed therein that provides access to a cavity (17) between the inner (13) and outer (11) skins, and a trim element (21) having a pocket shaped part (27) that is arranged to fit through the aperture (19) into the cavity (17).

8. A door (1) according to claim 7, wherein the trim element (21) comprises a moulded component.

9. A door (1) according to any one of the preceding claims, wherein the pocket means (27, 127) extends along approximately 30 to 100 % of the width of the door (1).

10. A door (1) according to claim 9 when dependent on claim 4, wherein each of the first and second pockets (27, 127) extends along approximately 15 to 50% of the width of the door (1).

11. A door (1) according to any one of the preceding claims, wherein the depth of the pocket means (27, 127) is in the range 65 to 95mm.

12. A door (1) according to any one of the preceding claims, wherein the distance between the extremity of the free edge (7) of the door (1) and the gripping edge of the handle (22) is in the range 160 to 210mm.

13. A door (1) according to any one of the preceding claims, including a recessed portion (53) that enables a user to access the pocket means (27, 127) from within the vehicle.

14. A vehicle including a door (1) according to any one of the preceding claims.

15. A vehicle according to claim 14, wherein the door (1) is a rear door.

## Patentansprüche

1. Tür (1) für ein Fahrzeug, umfassend Kanten an der Randoberfläche oder der Wand der Tür, die eine erste Kante (5) zur schwenkbaren Befestigung an dem Fahrzeug, eine freie Kante (7) gegenüber der ersten Kante (5), eine seitliche Kante (8) und ein Aussparungsmittel (27, 127) einschließt, die in der Dicke der Tür (1) ausgebildet sind, wobei das Aussparungsmittel (27, 127) wenigstens einen Handgriff (22) bereitstellt, der durch einen Benutzer gegriffen werden kann, um die Tür (1) zu schließen;
**dadurch gekennzeichnet, dass**:
das Aussparungsmittel sich durch die freie Kante (7) und die seitliche Kante (8) öffnet.

2. Tür (1) nach Anspruch 1, wobei das Aussparungsmittel (27, 127) eine erste Aussparung einschließt, die sich sowohl durch die freie Kante (7) als auch die seitliche Kante (8) öffnet, wobei dadurch ein erster Handgriff (22), der über die freie Kante (7) und die seitliche Kante (8) zugänglich ist, bereitgestellt wird.

3. Tür (1) nach Anspruch 2, wobei die Tür (1) eine erste (8) und eine zweite (9) seitliche Kante einschließt und die erste Aussparung sich durch die erste und die zweite seitliche Kante öffnet.

4. Tür (1) nach Anspruch 2, wobei die Tür (1) eine erste (8) und eine zweite (9) seitliche Kante einschließt und das Aussparungsmittel (27, 127) eine zweite Aussparung einschließt, die sich durch die freie Kante (7) und durch die zweite seitliche Kante (9) öffnet, wobei dadurch ein zweiter Handgriff (22) bereitgestellt wird, der über die freie Kante (7) und die zweite seitliche Kante (9) zugänglich ist.

5. Tür (1) nach einem der vorhergehenden Ansprüche, wobei das Aussparungsmittel (27, 127) eine erste Aussparung, die sich durch die freie Kante (7) öffnet, und eine zweite Aussparung, die sich durch die seitliche Kante (8, 9) öffnet, einschließt, wobei dadurch ein erster Handgriff (22), der über die freie Kante (7) zugänglich ist, und ein zweiter Handgriff (22), der über die seitliche Kante (8, 9) zugänglich ist, bereitgestellt wird.

6. Tür (1) nach einem der vorhergehenden Ansprüche, einschließend eine Außenhaut (11), eine Innenhaut (13), die von der Außenhaut (11) getrennt beabstandet ist, und eine Kantenwand (7), die die Innen- und die Außenhaut miteinander verbindet, wobei das Aussparungsmittel (27) in der Kantenwand (7) zwischen der Innen- (13) und der Außenhaut (11) ausgebildet ist.

7. Tür (1) nach Anspruch 6, wobei die Kantenwand (7) wenigstens eine darin ausgebildete Öffnung (19), die einen Zugang zu einem Hohlraum (17) zwischen der Innen- (13) und der Außenhaut (11) bereitstellt, und ein Verkleidungselement (21) einschließt, das ein Aussparungsformstück (27) aufweist, das angeordnet ist, um durch die Öffnung (19) in den Hohlraum (17) zu passen.

8. Tür (1) nach Anspruch 7, wobei das Verkleidungselement (21) eine ausgeformte Komponente umfasst.

9. Tür (1) nach einem der vorhergehenden Ansprüche, wobei das Aussparungsmittel (27, 127) sich entlang ungefähr 30 bis 100 % der Breite der Tür (1) erstreckt.

10. Tür (1) nach Anspruch 9, wenn abhängig von Anspruch 4, wobei jede der ersten und der zweiten Aussparung (27, 127) sich entlang ungefähr 15 bis 50 % der Breite der Tür (1) erstreckt.

11. Tür (1) nach einem der vorhergehenden Ansprüche, wobei die Tiefe des Aussparungsmittels (27, 127) in dem Bereich von 65 bis 95 mm liegt.

12. Tür (1) nach einem der vorhergehenden Ansprüche, wobei der Abstand zwischen dem Endpunkt der freien Kante (7) der Tür (1) und der Griffkante des Handgriffs (22) in dem Bereich von 160 bis 210 mm liegt.

13. Tür (1) nach einem der vorhergehenden Ansprüche, einschließend einen eingelassenen Abschnitt (53), der es einem Benutzer ermöglicht, auf das Aussparungsmittel (27, 127) von innerhalb des Fahrzeugs zuzugreifen.

14. Fahrzeug, einschließend eine Tür (1) nach einem der vorhergehenden Ansprüche.

15. Fahrzeug nach Anspruch 14, wobei die Tür (1) eine Hintertür ist.

## Revendications

1. Porte (1) destinée à un véhicule, comprenant des bords à la surface périphérique ou à la paroi de la porte, comprenant un premier bord (5) de fixation pivotante au véhicule, un bord libre (7) opposé au premier bord (5), un bord latéral (8) et un moyen de poche (27, 127) formé dans l'épaisseur de la porte (1), dans laquelle le moyen de poche (27, 127) constituant au moins une poignée (22) qui peut être saisie par un utilisateur pour fermer la porte (1) ;
**caractérisée en ce que** :
le moyen de poche s'ouvre par le bord libre (7) et par le bord latéral (8).

2. Porte (1) selon la revendication 1, dans laquelle le moyen de poche (27, 127) comprend une première poche qui s'ouvre à la fois par le bord libre (7) et par le bord latéral (8), fournissant ainsi une première poignée (22) qui est accessible par le bord libre (7) et le bord latéral (8).

3. Porte (1) selon la revendication 2, dans laquelle la porte (1) comprend des premier (8) et second (9) bords latéraux, et la première poche s'ouvre par les premier et second bords latéraux.

4. Porte (1) selon la revendication 2, dans laquelle la porte (1) comprend des premier (8) et second (9) bords latéraux et le moyen de poche (27, 127) comprend une seconde poche qui s'ouvre par le bord libre (7) et par le second bord latéral (9), en constituant ainsi une seconde poignée (22), accessible par le bord libre (7) et par le second bord latéral (9).

5. Porte (1) selon l'une quelconque des revendications précédentes, dans laquelle le moyen de poche (27, 127) comprend une première poche qui s'ouvre par le bord libre (7) et une seconde poche qui s'ouvre par le bord latéral (8, 9), constituant ainsi une première poignée (22) accessible par le bord libre (7) et une seconde poignée (22) accessible par le bord latéral (8, 9).

6. Porte (1) selon l'une quelconque des revendications précédentes, comprenant un revêtement extérieur (11), un revêtement intérieur (13), espacé du revêtement extérieur (11), et une paroi de bord (7), qui relie les revêtements intérieur et extérieur ensemble, dans laquelle le moyen de poche (27) est formé dans la paroi de bord (7), entre les revêtements intérieur (13) et extérieur (11).

7. Porte (1) selon la revendication 6, dans laquelle la paroi de bord (7) comprend au moins une ouverture (19) formée à l'intérieur qui donne accès à une cavité (17) entre les revêtements intérieur (13) et extérieur (11), et un élément de garniture (21) comportant une partie en forme de poche (27) disposée pour s'adapter à travers l'ouverture (19) dans la cavité (17).

8. Porte (1) selon la revendication 7, dans laquelle l'élément de garniture (21) comprend une pièce moulée.

9. Porte (1) selon l'une quelconque des revendications précédentes, dans laquelle le moyen de poche (27, 127) s'étend sur environ 30 à 100 % de la largeur de la porte (1).

10. Porte (1) selon la revendication 9 lorsqu'elle dépend de la revendication 4, dans laquelle chacune des première et deuxième poches (27, 127) s'étend sur environ 15 à 50 % de la largeur de la porte (1).

11. Porte (1) selon l'une quelconque des revendications précédentes, dans laquelle la profondeur du moyen de poche (27, 127) est comprise entre 65 et 95 mm.

12. Porte (1) selon l'une quelconque des revendications précédentes, dans laquelle la distance entre l'extrémité du bord libre (7) de la porte (1) et le bord de préhension de la poignée (22) est comprise entre 160 et 210 mm.

13. Porte (1) selon l'une quelconque des revendications précédentes, comprenant une partie en retrait (53) qui permet à l'utilisateur d'accéder au moyen de poche (27, 127) depuis l'intérieur du véhicule.

14. Véhicule comportant une porte (1) selon l'une quelconque des revendications précédentes.

15. Véhicule selon la revendication 14, dans lequel la porte (1) est une porte arrière.
